(19) Europäisches Patentamt
European Patent Office
Office européen des brevets

(11) EP 2 985 306 A1

(12) EUROPEAN PATENT APPLICATION
published in accordance with Art. 153(4) EPC

(43) Date of publication:
**17.02.2016 Bulletin 2016/07**

(21) Application number: **14783357.8**

(22) Date of filing: **02.04.2014**

(51) Int Cl.:
***C08G 69/40*** *(2006.01)* ***B32B 15/08*** *(2006.01)*

(86) International application number:
**PCT/JP2014/059769**

(87) International publication number:
**WO 2014/168060 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.04.2013 JP 2013081502**

(71) Applicant: **Mitsubishi Gas Chemical Company, Inc.**
**Tokyo 100-8324 (JP)**

(72) Inventors:
- **KIKUCHI, Mayumi**
  **Hiratsuka-shi**
  **Kanagawa 254-0016 (JP)**
- **KATO, Tomonori**
  **Hiratsuka-shi**
  **Kanagawa 254-0016 (JP)**
- **SATO, Kazuya**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

# (54) METAL-COATING MATERIAL

(57) The present invention provides a metal coating material containing a polyether polyamide (A) in which a diamine constituent unit thereof includes constituent units derived from a polyether diamine compound (a-1) having a specified structure and a xylylenediamine (a-2), and a dicarboxylic acid constituent unit thereof includes a constituent unit derived from an $\alpha,\omega$-linear aliphatic dicarboxylic acid (a-3) having from 4 to 20 carbon atoms, the metal coating material having favorable abrasion resistance and oil resistance and excellent adhesive properties to metals.



Printed by Jouve, 75001 PARIS (FR)

## Description

### Technical Field

The present invention relates to a metal coating material which can be used for a metal coating application.

### Background Art

Polyamides have not only excellent mechanical properties, such as abrasion resistance, impact resistance, etc., but also excellent chemical resistance to a large number of substances, such as hydrocarbons, bases, inorganic acids, etc., and therefore, they are widely used for a coating application to metal base materials.

However, it is known that the polyamides are insufficient in terms of adhesive properties to metals.

For the purpose of enhancing the adhesive properties to metals, a variety of metal coating materials using a polyamide are proposed.

For example, PTL 1 discloses a polyamide resin composition for metal coating containing a prescribed amount of a silane coupling agent and a prescribed amount of a specified epoxidized styrene-based thermoplastic elastomer in a polyamide resin.

In addition, PTL 2 discloses a metal coating material including a polyamide resin in which a dicarboxylic acid component thereof is composed of oxalic acid, a diamine component thereof is composed of a specified C9 diamine mixture and 1,6-hexanediamine (C6 diamine), and a molar ratio of the C9 diamine mixture and the C6 diamine is in a prescribed range.

### Citation List

### Patent Literature

PTL 1: JP-A-2004-346255
PTL 2: JP-A-2010-77212

### Summary of Invention

### Technical Problem

However, the metal coating materials for coating a metal substrate are required to have more abrasion resistance and adhesive properties to metals. As for such points, it may not be said that the metal coating materials disclosed in PTLs 1 and 2 are thoroughly improved.

In addition, in the metal coating materials disclosed in PTLs 1 and 2, in order to enhance the adhesive properties to metals, the thermoplastic elastomer is compounded; however, there may be the case where if the thermoplastic elastomer is compounded, its compatibility with the polyamide is lowered, whereby mechanical properties or surface properties which the polyamide has are hindered. Furthermore, the metal coating materials are required to have oil resistance.

An object of the present invention is to provide a metal coating material having favorable abrasion resistance and oil resistance and excellent adhesive properties to metals.

### Solution to Problem

The present inventors have found that a metal coating material containing a polyether polyamide including a constituent unit derived from a polyether diamine compound having a specified structure as a diamine structural unit may solve the foregoing problem, leading to accomplishment of the present invention.

Specifically, the present invention is to provide the following metal coating material.

A metal coating material containing a polyether polyamide (A) in which a diamine constituent unit thereof includes constituent units derived from a polyether diamine compound (a-1) represented by the following general formula (1) and a xylylenediamine (a-2), and a dicarboxylic acid constituent unit thereof includes a constituent unit derived from an $\alpha,\omega$-linear aliphatic dicarboxylic acid (a-3) having from 4 to 20 carbon atoms:

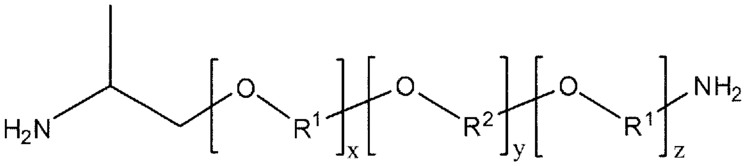 (1)

(In the formula, (x + z) represents 1 to 60; y represents 1 to 50; each $-OR^1-$independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.)

Advantageous Effects of Invention

The metal coating material of the present invention has favorable abrasion resistance and oil resistance and excellent adhesive properties to metals.

Description of Embodiments

The metal coating material of the present invention contains a polyether polyamide (A) in which a diamine constituent unit thereof includes constituent units derived from a polyether diamine compound (a-1) represented by the foregoing general formula (1) and a xylylenediamine (a-2) and a dicarboxylic acid constituent unit thereof includes a constituent unit derived from an $\alpha,\omega$-linear aliphatic dicarboxylic acid (a-3) having from 4 to 20 carbon atoms.

In addition, the metal coating material of the present invention may contain a thermoplastic resin other than the polyether polyamide (A), a silane coupling agent, and other additives.

A content of the polyether polyamide (A) is preferably 85 to 100% by mass, more preferably 90 to 100% by mass, still more preferably 95 to 100% by mass, and yet still more preferably 98 to 100% by mass relative to the whole amount of the metal coating material of the present invention.

So long as the content of the polyether polyamide (A) is 85% by mass or more, a metal coating material capable of enhancing adhesive properties to metals and having excellent abrasion resistance can be formed. In addition, mechanical properties and surface properties which the polyether polyamide (A) has can be kept.

[Polyether polyamide (A)]

As for the polyether polyamide (A) which is used in the present invention, a diamine constituent unit thereof includes constituent units derived from a polyether diamine compound (a-1) represented by the following general formula (1) and a xylylenediamine (a-2), and a dicarboxylic acid constituent unit thereof includes a constituent unit derived from an $\alpha,\omega$-linear aliphatic dicarboxylic acid (a-3) having from 4 to 20 carbon atoms. By incorporating the polyether polyamide (A), a metal coating material excellent in terms of abrasion resistance and adhesive properties to metals can be obtained.

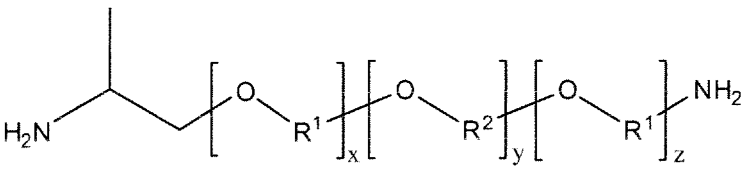 (1)

(In the formula (1), (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.)

[Diamine constituent unit]

The diamine constituent unit that constitutes the polyether polyamide (A) includes constituent units derived from the polyether diamine compound (a-1) represented by the foregoing general formula (1) and the xylylenediamine (a-2).

A total content of the constituent units derived from the polyether diamine compound (a-1) and the xylylenediamine (a-2) in the diamine constituent unit of the polyether polyamide (A) is preferably 50 to 100% by mole, more preferably 70 to 100% by mole, still more preferably 80 to 100% by mole, and yet still more preferably 90 to 100% by mole.

<Polyether diamine compound (a-1)>

The diamine constituent unit that constitutes the polyether polyamide (A) includes a constituent unit derived

from the polyether diamine compound (a-1) represented by the foregoing general formula (1).

In the foregoing general formula (1), (x + z) is 1 to 60, preferably 2 to 40, more preferably 2 to 30, still more preferably 2 to 20, and yet still more preferably 2 to 15.

In addition, y is 1 to 50, preferably 1 to 40, more preferably 1 to 30, and still more preferably 1 to 20.

In the case where the values of x, y, and z are more than the above-described ranges, the compatibility with an oligomer or a polymer each composed of the xylylenediamine and the dicarboxylic acid as produced on the way of the reaction of melt polymerization is low, so that the polymerization reaction becomes hard to proceed.

In addition, in the foregoing general formula (1), each $-OR^1-$ independently represents $-OCH_2CH_2CH_2-$, $-OCH(CH_3)CH_2-$, or $-OCH_2CH(CH_3)-$.

A number average molecular weight of the polyether diamine compound (a-1) is preferably 176 to 7,000, more preferably 200 to 5,000, still more preferably 300 to 3,500, yet still more preferably 400 to 2,500, and even yet still more preferably 500 to 1,800.

So long as the average molecular weight of the polyether diamine compound falls within the foregoing range, a polymer that reveals functions, such as flexibility, rubber elasticity, etc., can be obtained.

From the viewpoint of making a metal coating material which is enhanced in terms of adhesive properties to metals, abrasion resistance, and oil resistance, the polyether diamine compound (a-1) represented by the foregoing general formula (1) is specifically a polyether diamine compound represented by the following general formula (1-1) or (1-2). In particular, from the viewpoint of making a metal coating material which is more enhanced in terms of abrasion resistance and oil resistance, a polyether diamine compound represented by the following general formula (1-2) is preferred.

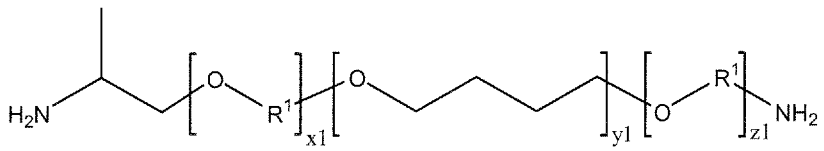

(1-1)

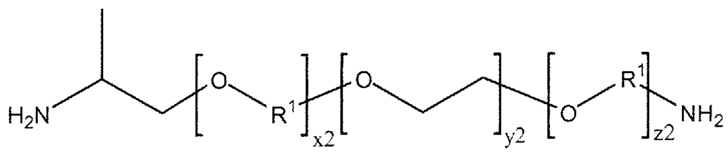

(1-2)

In the foregoing general formula (1-1), (x1 + z1) represents 1 to 60; y1 represents 1 to 50; and $-OR^1-$ represents $-OCH_2CH_2CH_2-$, $-OCH(CH_3)CH_2-$, or $-OCH_2CH(CH_3)-$.

In addition, in the foregoing general formula (1-2), (x2 + z2) represents 1 to 60; y2 represents 1 to 50; and $-OR^1-$ represents $-OCH_2CH_2CH_2-$, $-OCH(CH_3)CH_2-$, or $-OCH_2CH(CH_3)-$.

In the foregoing general formula (1-1), the numerical value of (x1 + z1) is 1 to 60, preferably 2 to 40, more preferably 2 to 30, still more preferably 2 to 20, and yet still more preferably 2 to 15. In addition, the numerical value of y1 is 1 to 50, preferably 1 to 40, more preferably 1 to 30, and still more preferably 1 to 20.

In the foregoing general formula (1-2), the numerical value of (x2 + z2) is 1 to 60, preferably 2 to 40, more preferably 2 to 30, still more preferably 2 to 20, and yet still more preferably 2 to 15. In addition, the numerical value of y2 is 1 to 50, preferably 1 to 40, more preferably 1 to 30, and still more preferably 1 to 20.

A number average molecular weight of the polyether diamine compound represented by the foregoing general formula (1-1) is preferably 204 to 7,000, more preferably 250 to 5,000, still more preferably 300 to 3,500, yet still more preferably 400 to 2,500, and even yet still more preferably 500 to 1,800.

A number average molecular weight of the polyether diamine compound represented by the foregoing general formula (1-2) is preferably 176 to 5, 700, more preferably 200 to 4,000, still more preferably 300 to 3,000, yet still more preferably 400 to 2,000, and even yet still more preferably 500 to 1,800.

Incidentally, these polyether diamine compounds (a-1) may be used solely or in combination of two or more kinds thereof.

A proportion of the constituent unit derived from the polyether diamine compound (a-1) in the diamine constituent unit of the polyether polyamide (A) is preferably 1 to 50% by mole, more preferably 3 to 30% by mole, still more preferably 5 to 25% by mole, and yet still more preferably 5 to 20% by mole.

So long as the proportion of the constituent unit derived from the polyether diamine compound (a-1) in the diamine constituent unit of the polyether polyamide (A) falls within the foregoing range, the resulting metal coating material is enhanced in terms of adhesive properties to metals and is also excellent in terms of abrasion resistance.

<Xylylenediamine (a-2)>

The diamine constituent unit that constitutes the polyether polyamide (A) includes a constituent unit derived from the xylylenediamine (a-2).

The xylylenediamine (a-2) is preferably m-xylylenediamine, p-xylylenediamine, or a mixture thereof, more preferably m-xylylenediamine or a mixture of m-xylylenediamine and p-xylylenediamine, and still more preferably a mixture of m-xylylenediamine and p-xylylenediamine.

In the case where the xylylenediamine (a-2) is derived from m-xylylenediamine, the resulting polyether polyamide (A) is excellent in terms of flexibility, crystallinity, melt moldability, molding processability, toughness, abrasion resistance, and oil resistance.

In the case where the xylylenediamine (a-2) is derived from a mixture of m-xylylenediamine and p-xylylenediamine, the resulting polyether polyamide (A) is excellent in terms of flexibility, crystallinity, melt moldability, molding processability, toughness, abrasion resistance, and oil resistance and furthermore, exhibits high heat resistance and a high elastic modulus.

Incidentally, these xylylenediamines (a-2) may be used solely or in combination of two or more kinds thereof.

In the case of using a mixture of m-xylylenediamine and p-xylylenediamine as the xylylenediamine (a-2), a proportion of p-xylylenediamine is preferably 90% by mole or less, more preferably 80% by mole or less, still more preferably 70% by mole or less, and yet still more preferably 5 to 70% by mole relative to a total amount of m-xylylenediamine and p-xylylenediamine.

So long as the proportion of p-xylylenediamine falls within the foregoing range, a melting point of the resulting polyether polyamide is not close to a decomposition temperature of the polyether polyamide, and hence, such is preferred.

From the viewpoint of obtaining a metal coating material having favorable abrasion resistance and oil resistance, a proportion of the constituent unit derived from the xylylenediamine (a-2) in the diamine constituent unit of the polyether polyamide (A) is preferably 50 to 99% by mole, more preferably 70 to 97% by mole, still more preferably 75 to 95% by mole, and yet still more preferably 80 to 95% by mole.

<Other diamine compounds>

As described above, though the diamine constituent unit that constitutes the polyether polyamide (A) includes the constituent units derived from the polyether diamine compound (a-1) represented by the foregoing general formula (1) and the xylylenediamine (a-2), it may include a constituent unit derived from other diamine compound so long as the effects of the present invention are not hindered.

As the diamine compound that may constitute a diamine constituent unit other than the polyether diamine compound (a-1) and the xylylenediamine (a-2). there can be exemplified aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, 2,4,4-trimethylhexamethylenediamine, etc.; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like. However, it should not be construed that the diamine compound is limited to these compounds.

The other diamine compounds may be used solely or in combination of two or more kinds thereof.

[Dicarboxylic acid constituent unit]

The dicarboxylic acid constituent unit that constitutes the polyether polyamide (A) includes a constituent unit derived from an $\alpha,\omega$-linear aliphatic dicarboxylic acid (a-3) having from 4 to 20 carbon atoms.

A content of the constituent unit derived from an $\alpha,\omega$-linear aliphatic dicarboxylic acid (a-3) having from 4 to 20 carbon atoms in the dicarboxylic acid constituent unit of the polyether polyamide (A) is preferably 50 to 100% by mole, and more preferably 70 to 100% by mole.

Examples of the $\alpha,\omega$-linear aliphatic dicarboxylic acid (a-3) having from 4 to 20 carbon atoms include succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like.

Of these, from the viewpoints of crystallinity and high elasticity and the viewpoint of enhancing adhesive properties to metals, at least one selected from the group consisting of adipic acid and sebacic acid is preferred, and in particular, from the viewpoint of enhancing adhesive properties to metals, sebacic acid is more preferred.

These dicarboxylic acids may be used solely or in combination of two or more kinds thereof.

As described above, though the dicarboxylic acid constituent unit that constitutes the polyethylene polyamide

(A) includes the constituent unit derived from the α,ω-linear aliphatic dicarboxylic acid (a-3) having from 4 to 20 carbon atoms, it may also include a constituent unit derived from other dicarboxylic acid so long as the effects of the present invention are not hindered.

As the dicarboxylic acid that may constitute the dicarboxylic acid constituent unit other than the α,ω-linear aliphatic dicarboxylic acid (a-3) having from 4 to 20 carbon atoms, there can be exemplified aliphatic dicarboxylic acids, such as oxalic acid, malonic acid, etc.; aromatic dicarboxylic acids, such as terephthalic acid, isophthalic acid, 2,6-naphthalenedicarboxylic acid, etc.; and the like. However, it should not be construed that the dicarboxylic acid is limited thereto.

In the case of using a mixture of the α,ω-linear aliphatic dicarboxylic acid (a-3) having from 4 to 20 carbon atoms and isophthalic acid as the dicarboxylic acid component, the heat resistance and molding processability of the polyether polyamide (A) can be enhanced.

A molar ratio of the α,ω-linear aliphatic dicarboxylic acid (a-3) having from 4 to 20 carbon atoms and isophthalic acid ((α,ω-linear aliphatic dicarboxylic acid (a-3) having from 4 to 20 carbon atoms)/(isophthalic acid)) is preferably from 50/50 to 99/1, and more preferably from 70/30 to 95/5.

[Physical properties of polyether polyamide (A)]

When the polyether polyamide (A) contains, as a hard segment, a highly crystalline polyamide block formed of the xylylenediamine (a-2) and the α,ω-linear aliphatic dicarboxylic acid (a-3) having from 4 to 20 carbon atoms and, as a soft segment, a polyether block derived from the polyether diamine compound (a-1), the resulting metal coating material can be made favorable in terms of mechanical properties and surface properties and can be enhanced in terms of adhesive properties to metals, abrasion resistance, and oil resistance.

A relative viscosity of the polyether polyamide (A) is preferably in the range of 1.1 to 3.0, more preferably in the range of 1.1 to 2.9, and still more preferably in the range of 1.1 to 2.8.

Incidentally, the relative viscosity of the polyether polyamide (A) is a ratio of a fall time (t) obtained by dissolving 0.2 g of a sample in 20 mL of 96% by mass sulfuric acid and measuring the resulting solution at 25°C by a Cannon-Fenske viscometer to a fall time (to) of the 96% by mass sulfuric acid itself as similarly measured and is expressed according to the following equation.

$$\text{Relative viscosity} = t/t_0$$

A melting point (Tm) of the polyether polyamide (A) is preferably in the range of 170 to 270°C, more preferably in the range of 175 to 270°C, still more preferably in the range of 180 to 270°C, and yet still more preferably in the range of 180 to 260°C from the viewpoints of heat resistance and melt moldability.

Incidentally, the melting point of the polyether polyamide (A) is measured by using a differential scanning calorimeter, and specifically, the melting point means a value measured by a method described in the Examples.

A rate of tensile elongation at break of the polyether polyamide (A) (measurement temperature: 23°C, humidity: 50% RH (relative humidity)) is preferably 100% or more, more preferably 200% or more, still more preferably 250% or more, and yet still more preferably 300% or more from the viewpoint of flexibility.

A tensile elastic modulus of the polyether polyamide (A) (measurement temperature: 23°C, humidity: 50% RH (relative humidity)) is preferably 100 MPa or more, more preferably 200 MPa or more, still more preferably 300 MPa or more, yet still more preferably 400 MPa or more, and even yet still more preferably 500 MPa or more from the viewpoints of flexibility and mechanical strength.

The tensile elastic modulus and the rate of tensile elongation at break are measured in conformity with JIS K7161.

[Production of polyether polyamide (A)]

The production of the polyether polyamide (A) is not particularly limited but can be carried out by an arbitrary method under an arbitrary polymerization condition.

The polyether polyamide (A) can be, for example, produced by a method in which a salt composed of the diamine component (the diamine including the polyether diamine compound (a-1) and the xylylenediamine (a-2), and the like) and the dicarboxylic acid component (the dicarboxylic acid including the α,ω-linear aliphatic dicarboxylic acid (a-3) having from 4 to 20 carbon atoms and the like) is subjected to temperature rise in a pressurized state in the presence of water, and polymerization is carried out in a molten state while removing the added water and condensed water.

In addition, the polyether polyamide (A) can also be produced by a method in which the diamine component (the diamine including the polyether diamine compound (a-1) and the xylylenediamine (a-2), and the like) is added

directly to the dicarboxylic acid component (the dicarboxylic acid including the α,ω-linear aliphatic dicarboxylic acid (a-3) having from 4 to 20 carbon atoms and the like) being in a molten state, and polycondensation is carried out at atmospheric pressure. In this case, in order to keep the reaction system in a uniform liquid state, the diamine component is continuously added to the dicarboxylic acid component, and during that period, the polycondensation is advanced while subjecting the reaction system to temperature rise such that the reaction temperature does not fall below the melting point of each of the formed oligoamide and polyamide.

On that occasion, among the diamine components, the polyether diamine compound (a-1) may be previously charged together with the dicarboxylic acid component in a reaction tank. By previously charging the polyether diamine compound (a-1) in a reaction tank, thermal deterioration of the polyether diamine compound (a-1) can be suppressed. In that case, in order to keep the reaction system in a uniform liquid state, the diamine component other than the polyether diamine compound (a-1) is continuously added to the dicarboxylic acid component, too, and during that period, the polycondensation is advanced while subjecting the reaction system to temperature rise such that the reaction temperature does not fall below the melting point of each of the formed oligoamide and polyamide.

A molar ratio of the diamine component (the diamine including the polyether diamine compound (a-1) and the xylylenediamine (a-2), and the like) and the dicarboxylic acid component (the dicarboxylic acid including the α,ω-linear aliphatic dicarboxylic acid (a-3) having from 4 to 20 carbon atoms and the like) ((diamine component)/(dicarboxylic acid component)) is preferably 0.9 to 1.1, more preferably 0.93 to 1.07, still more preferably 0.95 to 1.05, and yet still more preferably 0.97 to 1.02. So long as the molar ratio falls within the foregoing range, an increase of the molecular weight is easily advanced.

A polymerization temperature is preferably from 150 to 300°C, more preferably from 160 to 280°C, and still more preferably from 170 to 270°C. So long as the polymerization temperature falls within the foregoing temperature range, the polymerization reaction is rapidly advanced. In addition, since thermal decomposition of the monomers and the oligomer or polymer, etc. is hardly caused on the way of the polymerization, properties of the resulting polyether polyamide become favorable.

A polymerization time is preferably from 1 to 5 hours after starting to add dropwise the diamine component. By allowing the polymerization time to fall within the foregoing range, the molecular weight of the polyether polyamide (A) can be sufficiently increased, and furthermore, coloration of the resulting polyether polyamide can be suppressed.

It is preferred that the polyether polyamide (A) is produced by a melt polycondensation (melt polymerization) method by the addition of a phosphorus atom-containing compound. As the melt polycondensation method, preferred is a method in which the diamine component is added dropwise to the molten dicarboxylic acid component at atmospheric pressure and polymerization is carried out in a molten state while removing the condensed water. Furthermore, among the diamine components, a method of previously charging the polyether diamine compound (b-1) together with the dicarboxylic acid component in a reaction tank and melting, adding dropwise the xylylenediamine component in the reaction tank, and then carrying out polymerization in a molten state while removing the condensed water is more preferred.

A phosphorus atom-containing compound may be added in the polycondensation system of the polyether polyamide (A) within the range where its properties are not hindered.

Examples of the phosphorus atom-containing compound include dimethylphosphinic acid, phenylmethylphosphinic acid, hypophosphorous acid, sodium hypophosphite, calcium hypophosphite, potassium hypophosphite, lithium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like. However, it should not be construed that the phosphorus atom-containing compound is limited thereto.

Of these, hypophosphorous acid metal salts, such as sodium hypophosphite, potassium hypophosphite, lithium hypophosphite, etc., are preferred, with sodium hypophosphite being more preferred, from the viewpoint that they are high in terms of an effect for promoting the amidation reaction and also excellent in terms of a coloration preventing effect.

An addition amount of the phosphorus atom-containing compound which is added in the polycondensation system is preferably from 1 to 1,000 ppm, more preferably from 5 to 1,000 ppm, and still more preferably from 10 to 1,000 ppm as converted into a phosphorus atom concentration in the polyether polyamide (A) from the viewpoints of favorable appearance and molding processability.

In addition, it is preferred to add an alkali metal compound in combination with the phosphorus atom-containing compound in the polycondensation system of the polyether polyamide (A).

In addition thereto, in order to prevent the coloration of the polymer during the polycondensation, it is necessary to allow a sufficient amount of the phosphorus atom-containing compound to exist; however, under certain circumstances, there is a concern that gelation of the polymer is caused. For that reason, in order to also adjust an amidation reaction rate, it is preferred to allow an alkali metal compound to coexist.

The alkali metal compound is preferably an alkali metal hydroxide or an alkali metal acetate.

Specifically, examples of the alkali metal compound include lithium hydroxide, sodium hydroxide, potassium hydroxide, rubidium hydroxide, cesium hydroxide, lithium acetate, sodium acetate, potassium acetate, rubidium acetate, cesium acetate, and the like.

In the case of adding the alkali metal compound in the polycondensation system, a value obtained by dividing the molar number of the compound by the molar number of the phosphorus atom-containing compound is preferably 0.50 to 1.00, more preferably 0.55 to 0.95, and still more preferably 0.60 to 0.90.

When the subject value falls within the foregoing range, an effect for appropriately suppressing the promotion of the amidation reaction attributable to the phosphorus atom-containing compound is brought, and the occurrence of the matter that the polycondensation reaction rate is lowered due to excessive suppression of the reaction, so that thermal history of the polymer increases, thereby causing an increase of gelation of the polymer, can be avoided.

The polyether polyamide (A) obtained by melt polycondensation is once taken out from the polymerization system, pelletized, and then dried for use. In addition, for the purpose of further increasing the degree of polymerization of the polyether polyamide (A), solid phase polymerization of the polyether polyamide (A) may also be carried out.

As a heating apparatus which is used for drying and solid phase polymerization, known apparatuses can be used. The above-described heating apparatus is preferably a continuous heat drying apparatus, a rotary drum-type heating apparatus called a tumble dryer, a conical dryer, a rotary dryer, or the like, or a or a cone-type heating apparatus equipped with a rotary blade in the inside thereof, called a Nauta mixer.

[Thermoplastic resin other than the component (A)]

The metal coating material of the present invention may further contain a thermoplastic resin other than the component (A) within the range where the effects of the present invention are not hindered.

Examples of the thermoplastic resin other than the component (A), which is contained in the metal coating material of the present invention, include polyamide resins, polyester resins, polyolefin resins, acrylic resins, and the like.

Examples of the polyamide resin include polycaproamide (nylon 6), polyundecanamide (nylon 11), polydodecanamide (nylon 12), polytetramethylene adipamide (nylon 46), polyhexamethylene adipamide (nylon 66), polyhexamethylene azelamide (nylon 69), polyhexamethylene sebacamide (nylon 610), polyundecamethylene adipamide (nylon 116), polyhexamethylene dodecamide (nylon 612), polyhexamethylene terephthalamide (nylon 6T (T represents a terephthalic acid component unit; hereinafter the same)), polyhexamethylene isophthalamide (nylon 6I (I represents an isophthalic acid component unit; hereinafter the same)), polyhexamethylene terephthalisophthalamide (nylon 6TI), polyheptamethylene terephthalamide (nylon 9T), poly-m-xylylene adipamide (nylon MXD6 (MXD represents an m-xylylenediamine component unit; hereinafter the same)), poly-m-xylylene sebacamide (nylon MXD10), poly-p-xylylene sebacamide (nylon PXD10 (PXD represents a p-xylylenediamine component unit)), a polyamide resin obtained by polycondensation of 1,3- or 1,4-bis(aminomethyl)cyclohexane and adipic acid (nylon 1,3-/1,4-BAC6 (BAC represents a bis(aminomethyl)cyclohexane component unit), and copolymerized amides thereof, and the like.

Examples of the polyester resin include a polyethylene terephthalate resin, a polyethylene terephthalate-isophthalate copolymer resin, a polyethylene-1,4-cyclohexane dimethylene-terephthalate copolymer resin, a polyethylene-2,6-naphthalene dicarboxylate resin, a polyethylene-2,6-naphthalene dicarboxylate-terephthalate copolymer resin, a polyethylene-terephthalate-4,4'-biphenyl dicarboxylate copolymer resin, a poly-1.3-propylene-t.erephthalate resin, a polybutylene terephthalate resin, a polybutylene-2,6-naphthalene dicarboxylate resin, and the like.

Of these, a polyethylene terephthalate resin, a polyethylene terephthalate-isophthalate copolymer resin, a polybutylene terephthalate resin, and a polyethylene-2,6-naphthalene dicarboxylate resin are preferred.

Examples of the polyolefin resin include polyethylenes, such as low density polyethylene (LDPE), linear low density polyethylene (LLDPE), very low density polyethylene (VLDPE), medium density polyethylene (MDPE), high density polyethylene (HDPE), etc.; polypropylenes, such as a propylene homopolymer, a random or block copolymer of propylene and ethylene or an $\alpha$-olefin, etc.; mixtures of two or more kinds thereof; and the like.

Incidentally, a majority of the polyethylenes is a copolymer of ethylene and an $\alpha$-olefin.

In addition, the polyolefin resin includes a modified polyolefin resin modified with a small amount of a carboxyl group-containing monomer, such as acrylic acid, maleic acid, methacrylic acid, maleic anhydride, fumaric acid, itaconic acid, etc. The modification is in general carried out by means of copolymerization or graft modification.

Examples of the acrylic resin include a homopolymer of a (meth)acrylic acid ester, a copolymer of two or more different kinds of (meth)acrylic acid ester monomers, and a copolymer of a (meth)acrylic acid ester and other monomer.

Specifically, examples thereof include (meth)acrylic resins composed of a homo- or copolymer including a (meth)acrylic acid ester, such as polymethyl (meth)acrylate, polyethyl (meth)acrylate, polypropyl (meth)acrylate, polybutyl (meth)acrylate, a methyl (meth)acrylate-butyl (meth)acrylate copolymer, an ethyl (meth)acrylate-butyl (meth)acrylate copolymer, an ethylene-methyl (meth)acrylate copolymer, a styrene-methyl (meth)acrylate copolymer, etc.

[Silane coupling agent]

The metal coating material of the present invention may contain a silane coupling agent.

The silane coupling agent is a silane compound having a structure in which an organic functional group having affinity or reactivity with an organic resin is chemically bonded to a hydrolyzable silyl group having affinity or reactivity with an inorganic material.

Examples of the hydrolyzable group bonded to silicon include an alkoxy group, a halogen, and an acetoxy group. Of these, an alkoxy group is preferred, and a methoxy group or an ethoxy group is more preferred.

The number of hydrolyzable groups which are bonded to one silicon atom is selected among 1 to 3.

Examples of the organic functional group include an amino group, an epoxy group, a vinyl group, a carboxyl group, a mercapto group, a halogen group, a methacryloxy group, an isocyanate group, and the like. Of these, an amino group or an epoxy group is preferred.

Specifically, examples of the silane coupling agent include amino group-containing silanes, such as α-aminoethyltriethoxysilane, α-aminopropyltriethoxysilane, α-aminobutyltriethoxysilane, γ-aminopropyltrimethoxy-silane, γ-aminopropyltriethoxysilane, γ-aminopropylmethyldimethoxysila.ne, γ-aminopropylmethyldiethoxysilane, N-β-(aminoethyl)-γ-aminopropyltrimethoxysilane, N-β-(aminoethyl)-γ-aminopropylmethyldimethoxysilane, N-β-(aminoethyl)-γ-aminopropyltriethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, etc.; epoxy group-containing silanes, such as γ-glycidoxypropyltrimethoxysilane, γ-glycidoxypropylmethyldimethoxysilane, γ-glycidoxypropyltriethoxysilane, γ-glycidoxypropylmethyldiethoxysilane. β-(3,4-epoxycyclohexyl)ethyltrimethoxysilane, β-(3,4-epoxycyclohexyl)ethyltriethoxysilane, etc.; vinyl group-containing silanes, such as vinyltrimethoxysilane, vinyltriethoxysilane, vinylmethyldimethoxysilane, etc.; carboxyl group-containing silanes, such as β-carboxyethyltriethoxysilane, β-carboxyethylphenylbis(2-methoxyethoxy)silane, N-β-(N-carboxylmethylaminoethyl)-γ-aminopropyltrimethoxysilane, etc.; mercapto group-containing silanes, such as γ-mercaptopropyltrimethoxysilane, γ-mercaptopropyltriethoxysilane, γ-mercaptopropylmethyldimethoxysilane, γ-mercaptopropylmethyldiethoxysilane, etc.; halogen-containing silanes, such as γ-chloropropyltrimethoxysilane, etc.; (meth)acryl group-containing silanes, such as γ-methacryloxypropyltrimethoxysilane, γ-methacryloxypropyltriethoxysilane, γ-acryloxypropyltrimethoxysilane, γ-methacryloxypropylmethyldimethoxysilane, γ-methacryloxypropylmethyldiethoxysilane, etc.; isocyanate group-containing silanes, such as γ-isocyanatopropyltrimethoxysilane, γ-isocyanatopropyltriethoxysilane, γ-isocyanatopropylmethyldiethoxysilane. γ-isocyanatopropylmethyldimethoxysilane, etc.; and the like.

These silane coupling agents may be used solely or in combination of two or more kinds thereof.

[Other additives]

The metal coating material of the present invention may also contain other additives within the range where the effects of the present invention are not hindered.

Examples of the other additives include a filler, a reinforced fiber, a stabilizer, a colorant, an ultraviolet absorber, a photostabilizer, an antioxidant, an antistatic agent, a flame retarder, a crystallization accelerator, a glass fiber, a plasticizer, a lubricant, a heat-resistant agent, and the like. However, it should not be construed that the additive is limited thereto.

A content of the other additives which are contained in the metal coating material of the present invention is preferably 0 to 10 parts by mass, more preferably 0 to 5 parts by mass, still more preferably 0 to 2 parts by mass, and yet still more preferably 0 to 0.1 parts by mass based on 100 parts by mass of the above-described polyether polyamide (A).

[Application of metal coating material]

A form of the metal coating material of the present invention is not particularly limited, but it may be either a molten state, such as a liquid material in which the above-described respective components are melted by heat, etc., or a solid state, such as a powdered material, a sheet-shaped material, etc. From the viewpoint of handling properties, the form of the metal coating material is preferably a solid state, such as a powdered material, a sheet-shaped material, etc., and more preferably a sheet-shaped material.

Incidentally, the sheet-shaped material can be obtained by kneading the above-described respective components by a screw extruder, a roll, or the like and molding the kneaded mixture by means of injection molding, extrusion molding, compression molding, calendar molding, or the like.

As for a temperature condition at the time of molding into a sheet-shaped material, from the viewpoint of preventing change of properties of the polyether polyamide (A), in the case where a melting point of the polyether polyamide (A) is defined as Tm (°C), the temperature is preferably Tm (°C) to (Tm + 80 (°C)), and more preferably Tm (°C) to (Tm + 60 (°C)).

In the case of forming the metal coating material of the present invention in a sheet-shaped material, a thickness of the sheet-shaped material is properly set up according to an application; however, it is preferably 0.01 to 10 mm, and more preferably 0.05 to 5 mm.

A metal base material to be coated with the metal coating material of the present invention is not particularly limited; however, examples thereof include metal base materials of a wide variety of metals, inclusive of not only iron but also non-iron metals, such as aluminum, copper, zinc, silver, gold, nickel, tin, lead, etc.

Of these, from the viewpoint of adhesive properties to the metal coating material of the present invention, a metal base material including at least one metal selected from the group consisting of aluminum, iron, copper, zinc, and silver is preferred.

Examples of the application of the metal coating material of the present invention include anticorrosive coating of fluid metal piping for general industry, anticorrosive coating of metal pipes inclusive of steel pipes and aluminum pipes for automobile fuels, oils, brake fluids, or the like, coating of metal wires, coating of plumbing plates, such as water tanks, etc., coating of electric wires of electric cord, and the like.

Although a method of coating the metal base material with the metal coating material of the present invention is not particularly limited, examples thereof include the following methods (1) to (3).

(1) A method of rendering the metal coating material of the present invention in a molten state and then coating the metal base material that is an adherend, as in steel pipe coating by extrusion, etc.

(2) A method of heating the metal base material that is an adherend and then bringing the metal coating material of the present invention as a powdered material into contact with the surface of the metal base material to melt the metal coating material of the present invention as a powdered material by the heat of the metal base material, thereby coating the metal base material, as in powder coating.

(3) A method of bringing the metal base material and the metal coating material of the present invention as a sheet-shaped material into contact with each other and then heating the both, thereby coating the metal base material.

Incidentally, as for a temperature at the time of coating the metal base material with the metal coating material of the present invention, it is preferred to keep it at a temperature at which change of properties of the polyether polyamide (A) in the metal coating material is not caused.

As for a specific temperature at the time of coating the metal base material, in the case where a melting point of the polyether polyamide (A) is defined as Tm (°C), the temperature is preferably Tm (°C) to (Tm + 80 (°C)), and more preferably Tm (°C) to (Tm + 60 (°C)).

In addition, prior to coating with the metal coating material of the present invention, the metal base material may be subjected to a primer treatment with a conventionally known primer for metals.

However, since the metal coating material of the present invention is excellent in terms of adhesive properties to metals, it is not needed to especially apply the primer treatment. For that reason, from the viewpoint of enhancing the productivity, at the time of coating the metal base material with the metal coating material of the present invention, it is preferred that the metal base material is not subjected to the primer treatment.

[Examples]

The present invention is hereunder described in more detail by reference to the Examples, but it should not be construed that the present invention is limited thereto. Incidentally, in the present Examples, various measurements were carried out by the following methods.

(1) Relative viscosity (ηr)

0.2 g of each of polyether polyamides or polyamides obtained in the following Production Examples was accurately weighed, and the polyether polyamide or polyamide was added to 20 mL of 96% by mass sulfuric acid and completely dissolved therein at 20 to 30°C with stirring, thereby preparing a solution. Thereafter, 5 mL of the solution was rapidly taken into a Cannon-Fenske viscometer, allowed to stand in a thermostat at 25°C for 10 minutes, and then measured for a fall time (t). In addition, a fall time ($t_0$) of the 96% by mass sulfuric acid itself was similarly measured. A relative viscosity was calculated from t and to according to the following equation (2).

$$\text{Equation (2): Relative viscosity} = t/t_0$$

(2) Number average molecular weight (Mn)

Each of polyether polyamides or polyamides obtained in the following Production Examples was dissolved in a mixed solvent of phenol and ethanol (phenol/ethanol = 4/1 (volume ratio)) and a benzyl alcohol solvent, respectively, and a terminal carboxyl group concentration and a terminal amino group concentration were determined by means of neutralization titration with hydrochloric acid and a sodium hydroxide aqueous solution, respectively. A number average molecular weight (Mn) was determined from quantitative values of the terminal amino group concentration and the terminal carboxyl group concentration according to the following equation (3).

$$\text{Equation (3): Number average molecular weight} = 2 \times 1{,}000{,}000/([NH_2] + [COOH])$$

$[NH_2]$: Terminal amino group concentration (μeq/g)
[COOH]: Terminal carboxyl group concentration (μeq/g)

(3) Differential scanning calorimetry (glass transition temperature, crystallization temperature, and melting point)

The measurement of a differential scanning calorie was carried out in conformity with JIS K7121 and K7122. By using a differential scanning calorimeter (a trade name: "DSC-60'', manufactured by Shimadzu Corporation), each of polyether polyamides or polyamides obtained in the following Production Examples was charged in a DSC measurement pan and subjected to a pre-treatment of raising the temperature to 300°C in a nitrogen atmosphere at a temperature rise rate of 10°C/min and rapid cooling, followed by performing the measurement. As for the measurement condition, the temperature was raised at a rate of 10°C/min, and after keeping at 300°C for 5 minutes, the temperature was dropped to 100°C at a rate of -5°C/min, thereby determining a glass transition temperature Tg, a crystallization temperature Tch, and a melting point Tm of each of the polyether polyamides or polyamides obtained in the following Production Examples.

(Production Example 1) Production of polyether polyamide A1

In a reaction vessel having a capacity of about 3 L and equipped with a stirrer, a nitrogen gas inlet, and a condensed water discharge port, 748.33 g of sebacic acid, 0.6565 g of sodium hypophosphite, monohydrate, and 0.4572 g of sodium acetate were charged, and after thoroughly purging the inside of the vessel with nitrogen, the added components were melted at 170°C while feeding a nitrogen gas at a rate of 20 mL/min into the vessel. A mixed liquid of 335.12 g of m-xylylenediamine (MXDA) (manufactured by Mitsubishi Gas Chemical Company, Inc.) and 143.62 g of p-xylylenediamine (PXDA) (manufactured by Mitsubishi Gas Chemical Company, Inc.) (MXDA/PXDA = 70/30 (molar ratio)) and 185.00 g of a polyether diamine (a trade name: "JEFFAMINE" (registered trademark) XTJ-542, manufactured by Huntsman Corporation, USA; according to the catalog of Huntsman Corporation, USA, this is a compound represented by the foregoing general formula (1-1), and in the formula (1-1), an approximate figure of (x1 + z1) is 6.0, an approximate figure of y1 is 9.0, $-OR^1-$ is $-OCH(CH_3)CH_2-$ or $-OCH_2CH(CH_3)-$, and an approximate average molecular weight is 1,000) was added dropwise thereto while gradually raising the temperature of the inside of the vessel to 260°C, and the mixture was polymerized for about 2 hours, thereby obtaining a polyether polyamide A1. Incidentally, the physical properties values of the polyether polyamide A1 are as follows.

$$\eta r = 1.45,\ [COOH] = 55.19\ \mu eq/g,\ [NH_2] = 70.61\ \mu eq/g,\ Mn = 15{,}898,\ Tg = 50.3°C,\ Tch = 83.0°C,\ Tm = 208.1°C.$$

(Production Example 2) Production of polyether polyamide A2

In a reaction vessel having a capacity of about 3 L and equipped with a stirrer, a nitrogen gas inlet, and a condensed water discharge port, 667.43 g of sebacic acid, 0.6587 g of sodium hypophosphite monohydrate, and 0.4588 g of sodium acetate were charged, and after thoroughly purging the inside of the vessel with nitrogen, the added components were melted at 170°C while feeding a nitrogen gas at a rate of 20 mL/min into the vessel. A mixed liquid of 283.16 g of m-xylylenediamine (MXDA) (manufactured by Mitsubishi Gas Chemical Company, Inc.) and 121.35 g of p-xylylenediamine (PXDA) (manufactured by Mitsubishi Gas Chemical Company, Inc.) (MXDA/PXDA = 70/30 (molar ratio)) and 330.00 g of a polyether diamine (a trade name: "JEFFAMINE" (registered trademark) XTJ-542, manufactured by

Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide A2. Incidentally, the physical properties values of the polyether polyamide A2 are as follows.

$$\eta r = 1.31,\ [COOH] = 81.62\ \mu eq/g,\ [NH_2] = 68.95\ \mu eq/g,\ Mn = 13{,}283,\ Tg = 12.9°C,\ Tch = 69.5°C,\ Tm = 204.5°C.$$

(Production Example 3) Production of polyether polyamide A3

In a reaction vessel having a capacity of about 3 L and equipped with a stirrer, a nitrogen gas inlet, and a condensed water discharge port, 768.55 g of sebacic acid, 0.6644 g of sodium hypophosphite monohydrate, and 0.4628 g of sodium acetate were charged, and after thoroughly purging the inside of the vessel with nitrogen, the added components were melted at 170°C while feeding a nitrogen gas at a rate of 20 mL/min into the vessel. A mixed liquid of 344.18 g of m-xylylenediamine (MXDA) (manufactured by Mitsubishi Gas Chemical Company, Inc.) and 147.50 g of p-xylylenediamine (PXDA) (manufactured by Mitsubishi Gas Chemical Company, Inc.) (MXDA/PXDA = 70/30 (molar ratio)) and 171.00 g of a polyether diamine (a trade name: "JEFFAMINE" (registered trademark) ED-900, manufactured by Huntsman Corporation, USA; according to the catalog of Huntsman Corporation, USA, this a compound represented by the foregoing general formula (1-2), and in the formula (1-2), an approximate figure of (x2 + z2) is 6.0, an approximate figure of y2 is 12.5, $-OR^1-$ is $-OCH(CH_3)CH_2-$ or $-OCH_2CH(CH_3)-$, and an approximate average molecular weight is 900) was added dropwise thereto while gradually raising the temperature of the inside of the vessel to 260°C, and the mixture was polymerized for about 2 hours, thereby obtaining a polyether polyamide A3. Incidentally, the physical properties values of the polyether polyamide A3 are as follows.

$$\eta r = 1.48,\ [COOH] = 66.91\ \mu eq/g,\ [NH_2] = 82.80\ \mu eq/g,\ Mn = 13{,}360,\ Tg = 27.6°C,\ Tch = 72.8°C,\ Tm = 207.6°C.$$

(Production Example 4) Production of polyether polyamide A4

In a reaction vessel having a capacity of about 3 L and equipped with a stirrer, a nitrogen gas inlet, and a condensed water discharge port, 687.65 g of sebacic acid, 0.6612 g of sodium hypophosphite monohydrate, and 0.4605 g of sodium acetate were charged, and after thoroughly purging the inside of the vessel with nitrogen, the added components were melted at 170°C while feeding a nitrogen gas at a rate of 20 mL/min into the vessel. A mixed liquid of 291.74 g of m-xylylenediamine (MXDA) (manufactured by Mitsubishi Gas Chemical Company, Inc.) and 125.03 g of p-xylylenediamine (PXDA) (manufactured by Mitsubishi Gas Chemical Company, Inc.) (MXDA/PXDA = 70/30 (molar ratio)) and 306.00 g of a polyether diamine (a trade name: "JEFFAMINE" (registered trademark) ED-900, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide A4. Incidentally, the physical properties values of the polyether polyamide A4 are as follows.

$$\eta r = 1.36,\ [COOH] = 66.35\ \mu eq/g,\ [NH_2] = 74.13\ \mu eq/g,\ Mn = 14{,}237,\ Tg = 16.9°C,\ Tch = 52.9°C,\ Tm = 201.9°C.$$

(Production Example 5) Production of polyether polyamide A5

In a reaction vessel having a capacity of about 3 L and equipped with a stirrer, a nitrogen gas inlet, and a condensed water discharge port, 555.37 g of adipic acid, 0.6490 g of sodium hypophosphite monohydrate, and 0.4521 g of sodium acetate were charged, and after thoroughly purging the inside of the vessel with nitrogen, the added components were melted at 170°C while feeding a nitrogen gas at a rate of 20 mL/min into the vessel. A mixed liquid of 326.06 g of m-xylylenediamine (MXDA) (manufactured by Mitsubishi Gas Chemical Company, Inc.) and 139.74 g of p-xylylenediamine (PXDA) (manufactured by Mitsubishi Gas Chemical Company, Inc.) (MXDA/PXDA = 70/30 (molar ratio))

and 380.00 g of a polyether diamine (a trade name: "JEFFAMINE" (registered trademark) XTJ-542, manufactured by Huntsman Corporation, USA; the details thereof are the same as those described above) was added dropwise thereto while gradually raising the temperature of the inside of the vessel to 270°C, and the mixture was polymerized for about 2 hours, thereby obtaining a polyether polyamide A5. Incidentally, the physical properties values of the polyether polyamide A5 are as follows.

$\eta r$ = 1.36, [COOH] = 64.82 μeq/g, [$NH_2$] = 100.70 μeq/g, Mn = 12,083, Tg = 79.3°C, Tch = 107.1°C, Tm = 251.4°C.

(Production Example 6) Production of polyether polyamide A6

In a reaction vessel having a capacity of about 3 L and equipped with a stirrer, a nitrogen gas inlet, and a condensed water discharge port, 584.60 g of adipic acid, 0.6626 g of sodium hypophosphite monohydrate, and 0.4616 g of sodium acetate were charged, and after thoroughly purging the inside of the vessel with nitrogen, the added components were melted at 170°C while feeding a nitrogen gas at a rate of 20 mL/min into the vessel. A mixed liquid of 343.22 g of m-xylylenediamine (MXDA) (manufactured by Mitsubishi Gas Chemical Company, Inc.) and 147.10 g of p-xylylenediamine (PXDA) (manufactured by Mitsubishi Gas Chemical Company, Inc.) (MXDA/PXDA = 70/30 (molar ratio)) and 360.00 g of a polyether diamine (a trade name: "JEFFAMINE" (registered trademark) ED-900, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide A6. Incidentally, the physical properties values of the polyether polyamide A6 are as follows.

$\eta r$ = 1.34, [COOH] = 75.95 μeq/g, [$NH_2$] = 61.83 μeq/g, Mn = 14,516, Tg = 33.2°C, Tch = 73.9°C, Tm = 246.2°C.

(Production Example 7) Production of polyamide B1

In a reaction vessel having a capacity of about 3 L and equipped with a stirrer, a nitrogen gas inlet, and a condensed water discharge port, 584.5 g of adipic acid, 0.6210 g of sodium hypophosphite monohydrate, and 0.4325 g of sodium acetate were charged, and after thoroughly purging the inside of the vessel with nitrogen, the added components were melted at 170°C while feeding a nitrogen gas at a rate of 20 mL/min into the vessel. 544.80 g of m-xylylenediamine (MXDA) (manufactured by Mitsubishi Gas Chemical Company, Inc.) was added dropwise thereto while gradually raising the temperature of the inside of the vessel to 260°C, and the mixture was polymerized for about 2 hours, thereby obtaining a polyamide B1. Incidentally, the physical properties values of the polyamide B1 are as follows.

$\eta r$ = 2.10, [COOH] = 104.30 μeq/g, [$NH_2$] = 24.58 μeq/g, Mn = 15,500, Tg = 86.1°C, Tch = 153.0°C, Tm = 239.8°C.

(Production Example 8) Production of polyamide B2

In a reaction vessel having a capacity of about 3 L and equipped with a stirrer, a nitrogen gas inlet, and a condensed water discharge port, 809.0 g of sebacic acid, 0.6210 g of sodium hypophosphite monohydrate, and 0.4325 g of sodium acetate were charged, and after thoroughly purging the inside of the vessel with nitrogen, the added components were melted at 170°C while feeding a nitrogen gas at a rate of 20 mL/min into the vessel. 544.80 g of m-xylylenediamine (MXDA) (manufactured by Mitsubishi Gas Chemical Company, Inc.) was added dropwise thereto while gradually raising the temperature of the inside of the vessel to 260°C, and the mixture was polymerized for about 2 hours, thereby obtaining a polyamide B2. Incidentally, the physical properties values of the polyamide B2 are as follows.

$\eta r$ = 1.80, [COOH] = 88.5 μeq/g, [$NH_2$] = 26.7 μeq/g, Mn = 17,300, Tg = 61.2°C, Tch = 114.1°C, Tm = 191.5°C.

(Production Example 9) Production of polyamide B3

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the added components were melted at 170°C while feeding a nitrogen gas at a rate of 20 mL/min into the vessel. A mixed liquid of 390.89 g of m-xylylenediamine (MXDA) (manufactured by Mitsubishi Gas Chemical Company, Inc.) and 167.53 g of p-xylylenediamine (PXDA) (manufactured by Mitsubishi Gas Chemical Company, Inc.) (MXDA/PXDA = 70/30 (molar ratio)) was added dropwise thereto while gradually raising the temperature of the inside of the vessel to 260°C, and the mixture was polymerized for about 2 hours, thereby obtaining a polyamide B3. Incidentally, the physical properties values of the polyamide B3 are as follows.

$\eta r$ = 2.20, [COOH] = 81.8 μeq/g, [$NH_2$] = 26.9 μeq/g, Mn = 18,400, Tg = 65.9°C, Tch = 100.1°C, Tm = 213.8°C.

(Production Example 10) Production of polyether polyamide B4

In a reaction vessel having a capacity of about 3 L and equipped with a stirrer, a nitrogen gas inlet, and a condensed water discharge port, 753.66 g of 12-aminolauric acid (manufactured by Tokyo Chemical Industry Co., Ltd.), 56.84 g of adipic acid, 0.5798 g of sodium hypophosphite monohydrate, and 0.4038 g of sodium acetate were charged, and after thoroughly purging the inside of the vessel with nitrogen, the added components were melted at 170°C while feeding a nitrogen gas at a rate of 20 mL/min into the vessel. 388.89 g of a polyether diamine (a trade name: "JEFFAMINE" (registered trademark) XTJ-542, manufactured by Huntsman Corporation, USA; the details thereof are the same as those described above) was added dropwise thereto while gradually raising the temperature of the inside of the vessel to 240°C, and the mixture was polymerized for about 2 hours, thereby obtaining a polyether polyamide B4. Incidentally, the physical properties values of the polyether polyamide B4 are as follows.

$\eta r$ = 1.25, [COOH] = 87.27 μeq/g, [$NH_2$] = 73.12 μeq/g, Mn = 12,470, Tm = 165.0°C.

(Examples 1 to 6 and Comparative Examples 1 to 4)

A resin composition composed of each of the polyether polyamides or polyamides produced in the foregoing Production Examples 1 to 10 of the types shown in Table 1 was used and subjected to extrusion molding at ((melting point Tm of the polyether polyamide or polyamide) + 20 to 30°C), thereby fabricating sheet-shaped metal coating materials having a thickness of 100 μm and 2 mm, respectively.

The fabricated metal coating materials were used and evaluated for each of physical properties by the following methods. Evaluation results are shown in Table 1.

(1) Maximum load at the time of peeling test

The fabricated metal coating material having a thickness of 100 μm was loaded on an aluminum foil having a thickness of 50 μm, and the resultant was heat sealed for 10 seconds by using a heat seal tester (a trade name: "STROGRAPH V1-C", manufactured by Toyo Seiki Seisaku-Sho, Ltd.) and setting up a heater temperature at a temperature that is higher by 50°C than the melting point of the used polyether polyamide or polyamide while applying a pressure of 0.2 MPa, thereby fabricating a test sample. Incidentally, a TEFLON (registered trademark) sheet was interposed between the heater and the metal coating material, thereby preventing fusion of the metal coating material to the heater from occurring.

Then, the fabricated test sample was cut into a strip having a width of 15 mm, thereby obtaining a test piece. The test piece was used and subjected to a T-type peeling test, thereby measuring a maximum load at the time of peeling

test. It is meant that the larger the value of the maximum load at the time of peeling test, the more excellent the adhesive properties of the metal coating material to metals are.

(2) Abrasion resistance test

The metal coating material having a thickness of 2 mm was used and subjected to a slidability test by using NUS-IS03, manufactured by Suga Test Instruments Co., Ltd. at a load of 9.8 N and the number of times of abrasion of 200 in an environment at 23°C and 50% RH (relative humidity). SiC#180 was used as an abrasive paper. A mass before and after the test was measured, an abrasion wear was calculated, and the abrasion resistance was evaluated according to the following criteria.

A: The abrasion wear is less than 7.0 mg.
B: The abrasion wear is 7.0 mg or more and less than 10.0 mg.
C: The abrasion wear is 10.0 mg or more.

(3) Oil resistance test

The metal coating material having a thickness of 2 mm was used, fully dipped in a dip test oil (a trade name: "IRM 903", manufactured by Nihonkosan Co., Ltd.), and preserved in a thermostat at 70°C for 70 hours. A mass of the sample before and after the dip test was measured, and a rate of mass change (%) was calculated according to the following equation (3).

$$\text{Equation (3): Rate of mass change (\%)} = \{(\text{Mass of the sample after dip test}) - (\text{Mass of the sample before dip test})\}/(\text{Mass of the sample before dip test}) \times 100$$

Table 1

| | | | | Example | | | | | | Comparative Example | | | |
|---|---|---|---|---|---|---|---|---|---|---|---|---|---|
| | | | | 1 | 2 | 3 | 4 | 5 | 6 | 1 | 2 | 3 | 4 |
| Metal coating material | | | | | | | | | | | | | |
| | Polyether polyamide or polyamide | | | A1 | A 2 | A3 | A4 | A5 | A6 | B1 | B2 | B3 | B4 |
| | Diamine (molar ratio) | (a-1) | XTJ-542 | 5 | 10 | 0 | 0 | 10 | 0 | 0 | 0 | 0 | 10 |
| | | | ED-900 | 0 | 0 | 5 | 10 | 0 | 10 | 0 | 0 | 0 | 0 |
| | | (a-2) | Xylylenediamine | 95 | 90 | 95 | 90 | 90 | 90 | 100 | 100 | 100 | 0 |
| | | | (MXDA/PXDA molar ratio) | (70/30) | (70/30) | (70/30) | (70/30) | (70/30) | (70/30) | (100/0) | (100/0) | (70/30) | - |
| | Dicarboxylic acid (molar ratio) | (a-3) | Adipic acid | 0 | 0 | 0 | 0 | 100 | 100 | 100 | 0 | 0 | 10 |
| | | | Sebacic acid | 100 | 100 | 100 | 100 | 0 | 0 | 0 | 100 | 100 | 0 |
| | 12-Aminolauric acid (molar ratio) | | | 0 | 0 | 0 | 0 | 0 | 0 | 0 | 0 | 0 | 90 |
| | Melting point of polyether polyamide or polyamide (°C) | | | 208.1 | 204.5 | 207.6 | 201.9 | 251.4 | 246.2 | 239.8 | 191.5 | 213.8 | 165.0 |
| Evaluation results | | | | | | | | | | | | | |
| | Maximum load at the time of peeling test (N) | | | 7.29 | 10.84 | 11.98 | 13.23 | 6.90 | 10.10 | 2.10 | 1.83 | 1.83 | 0.20 |
| | Abrasion resistance | | | B | B | A | A | B | A | B | B | B | B |
| | Oil resistance | | | <0.1 | 0.6 | <0.1 | <0.1 | 0.7 | <0.1 | <0.1 | <0.1 | <0.1 | 1.1 |

MXDA: m-Xylylenediamine
PXDA: p-Xylylenediamine
XTJ-542: Polyether diamine (manufactured by Huntsman Corporation)
ED-900: Polyether diamine (manufactured by Huntsman Corporation)

As shown in Table 1, there were obtained the results such that the metal coating materials containing the polyether polyamide (A) fabricated in Examples 1 to 6 are not only favorable in terms of abrasion resistance and oil resistance but also excellent in terms of adhesive properties to metals.

On the other hand, there were obtained the results such that the metal coating materials containing the polyamide fabricated in Comparative Examples 1 to 3 are small in terms of a value of the maximum load at the time of peeling test and inferior in terms of adhesive properties to metals, as compared with Examples 1 to 6. In addition, there were obtained the results such that the metal coating material containing the aliphatic polyether polyamide fabricated in Comparative Example 4 is not only small in terms of a value of the maximum load at the time of peeling test but also inferior in terms of adhesive properties to metals and inferior in terms of oil resistance, as compared with Examples 1 to 6.

## Claims

1. A metal coating material comprising a polyether polyamide (A) in which a diamine constituent unit thereof comprises constituent units derived from a polyether diamine compound (a-1) represented by the following general formula (1) and a xylylenediamine (a-2), and a dicarboxylic acid constituent unit thereof comprises a constituent unit derived from an α,ω-linear aliphatic dicarboxylic acid (a-3) having from 4 to 20 carbon atoms:

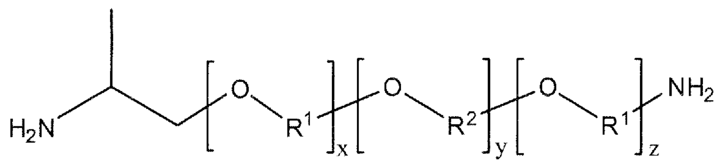
(1)

wherein (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.

2. The metal coating material according to claim 1, wherein a metal base material to be coated with the metal coating material comprises at least one metal selected from the group consisting of aluminum, iron, copper, zinc, and silver.

3. The metal coating material according to claim 1 or 2, wherein a proportion of the constituent unit derived from the polyether diamine compound (a-1) in the diamine constituent unit of the polyether polyamide (A) is 5 to 50% by mole.

4. The metal coating material according to any one of claims 1 to 3, wherein the xylylenediamine (a-2) is m-xylylenediamine, p-xylylenediamine, or a mixture thereof.

5. The metal coating material according to any one of claims 1 to 4, wherein the α,ω-linear aliphatic dicarboxylic acid (a-3) is adipic acid, sebacic acid, or a mixture thereof.

**INTERNATIONAL SEARCH REPORT**

International application No.
PCT/JP2014/059769

A. CLASSIFICATION OF SUBJECT MATTER
*C08G69/40*(2006.01)i, *B32B15/08*(2006.01)i

According to International Patent Classification (IPC) or to both national classification and IPC

B. FIELDS SEARCHED

Minimum documentation searched (classification system followed by classification symbols)
C08G69/40, B32B15/08, B32B27/00-27/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2012/111635 A1 (Mitsubishi Gas Chemical Co., Inc.), 23 August 2012 (23.08.2012), claims 1, 2, 6, 7; examples & TW 201239006 A | 1-5 |
| Y | WO 2012/111636 A1 (Mitsubishi Gas Chemical Co., Inc.), 23 August 2012 (23.08.2012), claims 1, 2, 6, 7; examples & TW 201239005 A | 1-5 |
| Y | WO 2009/057805 A1 (Ube Industries, Ltd.), 07 May 2009 (07.05.2009), claim 1; page 17, lines 24 to 26; page 26, line 23 to page 27, line 5 & JP 5251883 B & TW 200936643 A | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 June, 2014 (06.06.14) | 24 June, 2014 (24.06.14) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2014/059769

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2014-037463 A (Mitsubishi Gas Chemical Co., Inc.), 27 February 2014 (27.02.2014), claims 1, 4, 8, 9, 14, 15; examples (Family: none) | 1-5 |
| A | JP 2007-216387 A (Ube Industries, Ltd.), 30 August 2007 (30.08.2007), entire text & WO 2005/090065 A1 | 1-5 |
| A | WO 2008/123450 A1 (Ube Industries, Ltd.), 16 October 2008 (16.10.2008), entire text & TW 200900466 A | 1-5 |
| A | JP 3-237131 A (Mitsubishi Kasei Corp.), 23 October 1991 (23.10.1991), entire text (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004346255 A
- JP 2010077212 A